# EUROPEAN PATENT APPLICATION

(11) **EP 1 006 435 A1**
(43) Date of publication of application: **07.06.2000**
(21) Application number: 99309306.1
(22) Date of filing: 23.11.1999
(51) Int. Cl.: G06F 5/06

(54) **A memory operated in a modified ping-pong mode**

(30) Priority: 03.12.1998 US 204573
(71) Applicant: LUCENT TECHNOLOGIES INC., Murray Hill, New Jersey 07974-0636 (US)
(72) Inventor: Seery, James W., Manalapan, New Jersey 07726 (US)
(74) Representative: Johnston, Kenneth Graham

(57) **Abstract**

A memory having a plurality of memory locations that is not a multiple of a power of 2ⁿ is, nevertheless, operated in a Ping-Pong mode by writing data into even (odd) locations and unloading data from the odd (even) locations during a first cycle and then writing data into the odd (even) locations and unloading data from the even (odd) locations during the next, second cycle, and so on.

## Description

### Field Of The Invention:

The invention is directed to a memory device that is used in an Application Specific Integrated Circuit.

### Background Of The Invention:

Memory devices are often used in a so-called Ping-Pong fashion in which, during a first cycle, data is stored in a first half of the memory, and data that had been stored in a second half of the memory during a previous cycle is read out of the memory. During a next second cycle, data is stored in the second half of the memory and data is read out of the first half of the memory. This read/write process is readily accomplished by toggling the most significant bit of the memory write and read addresses to opposite states. To do this, the number of locations forming the memory has to be a multiple of a power of 2ⁿ. For example, an application that needs to Ping-Pong between 256 write locations and 256 read locations using the most significant bit can split a memory of 512 locations (which is a multiple of a power of 2ⁿ) into two equal halves of 256 locations. However, if the application needed only 400 write locations and 400 read locations then could it not use the most significant bit to toggle between the two halves of the memory. The reason for this is that the number 800 (400 + 400) is not a multiple of a power of 2ⁿ. Disadvantageously, the application would have to resort to a more complex addressing scheme. The application could use a larger memory having 1024 locations (which is the closest value to 800 that is a multiple of a power of 2ⁿ). Typically, using an oversized memory does not present a problem, since the cost of memory is relatively inexpensive. This might also be true in the case where an application needs to use a number of Ping-Pong memories.

A problem arises, however, in the design of Application Specific Integrated Circuits (ASIC), where space (area) and power consumption on the integrated circuit is very limited and, therefore, have to be used efficiently. As such, integrating oversized memory devices onto an ASIC for Ping-Pong purposes would be counterproductive, since space and power consumption would not be used efficiently.

### Summary Of The Invention:

I have recognized that the foregoing problem may be dealt with by using the least significant bit to toggle between the two halves of a memory, in which the number of locations forming the memory does not have to be a multiple of a power of 2ⁿ. Advantageously, then, a memory of almost any size may be used in a Ping-Pong mode, for example, a memory having 800 memory locations, without wasting memory locations.

More specifically, and in accordance with an aspect of the invention, I toggle the least significant bit such that, during a first cycle in which the least significant bit is zero, the locations having even numbered addresses may be used as the write locations and the location having the odd numbered addresses may be used as the read locations, and vice-versa during the next cycle when the least significant bit is toggled to a one .

These and other aspects of the invention will be appreciated from the following detailed description when read in conjunction with the accompanying drawings.

### Brief Description Of The Drawing:

In the drawing:
FIG. 1 is broad block diagram of a memory system in which the two halves of the memory are used in a conventional Ping-Pong mode;
FIG. 2 is broad block diagram of a memory system that is operated in accordance with the principles of the invention;
FlGs. 3 and 4 are illustrative examples of such operation; and
FIG. 5 is broad block diagram of an ASIC having a number of different memories deposited thereon.

### Detailed Description:

To facilitate an understanding of invention, the following first describes the operation of a conventional Ping-Pong memory that uses the Most Significant Bit (MSB) to toggle between the two halves of the memory. It then describes the instant invention, which uses the Least Significant Bit (LSB) to toggle between the two halves of a memory such that one half of the memory is composed of the even locations and the other half is composed of the odd locations, in which the number of locations does not have to be a multiple of a power of 2ⁿ, e.g., a memory having 768 locations.

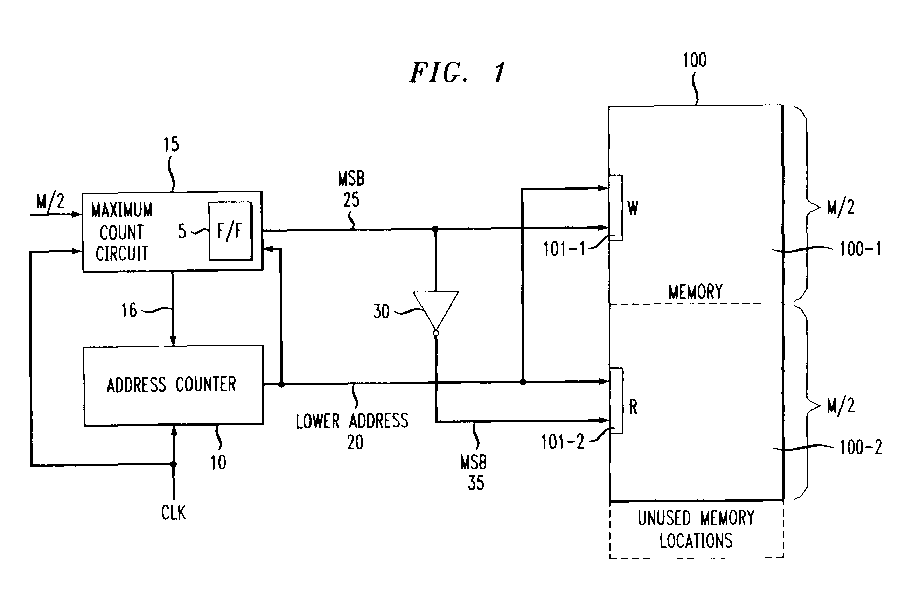

With that in mind, FIG. 1 is a broad block diagram of an illustrative memory system comprising, inter alia, memory 100, address counter 10, maximum count circuit 15 having a flip/flop 5. Except for write and read ports 101-1 and 101-2, the data in and data out ports of memory 100 as well as other ones of the ports are not shown. It is assumed that the number of locations M forming memory 100 is divisible by a power of 2ⁿ such that data may be written into memory half 100-1 and data may be read out of memory half 100-2 during a particular system cycle, e.g., a first cycle. During a next, second system cycle, data is read out of memory half 100-1 and data is written (loaded) into memory half 100-2. Assume that the system is currently in the first system cycle and the output of flip/flop 5 is a 0, which is outputted to lead 25 as the Most Significant Bit (MSB) of the write address that is supplied to port 101-1. Inverter 30 inverts the output supplied by flip/flop 5 and supplies the inverted result to read port 101-2. Thus, when a zero is supplied as the MSB to port 101-1, a binary one is supplied as the MSB to port 101-2, and vice-versa, thereby operating the two halves of memory 100 in a so-called Ping-Pong mode.

Counter 10 in a conventional manner counts the system clock pulses supplied via lead CLK and outputs the count as the lower address bits of the memory read/write, which is supplemented by the value of the MSB. Thus, in the first cycle when the count is zero, the first location of memory half 100-1 is addressed as a write location and the first location of memory half 100-2 is addressed as a read location, as a result of the value of MSB on leads 25 and 35. For the next clock pulse, the counter 10 advances to 1 and that value along with the value of the MSB supplied via lead 25 causes W port 101-1 of memory 100 to address the next memory location in half 100-1. The output of counter 10 and the value of MSB on lead 35 similarly causes R port 101-2 to address the next memory location in half 100-2, and so on, until the count in counter 10 reaches M/2, e.g., 1024/2. That is, maximum count circuit 15 continually compares the value of the count outputted to bus 20 as the lower address with the value of M/2. When those values equal one another, then maximum count circuit 15 uses the next clock pulse to clear address counter 10 and to toggle flip/flop 5, thereby causing W port 101-1 to address memory half 100-2 and R port 101-2 to address memory half 100-1-1 during the next system cycle. As such, a system data receiver (not shown) receives (reads) data from memory half 101-1 and a system data supplier (not shown) loads (writes) data into memory half 101-2 during the current cycle. During the next third cycle, the receiver unloads the data that the supplier stored in memory half 101-2 and the data supplier loads new data into memory half 101-1.

Note that if memory 100 were used in an application where M equaled, for example, 800, and the total number of memory were, for example, 1024, then 224 of those locations would not be used, as shown in phantom in FIG. 1.

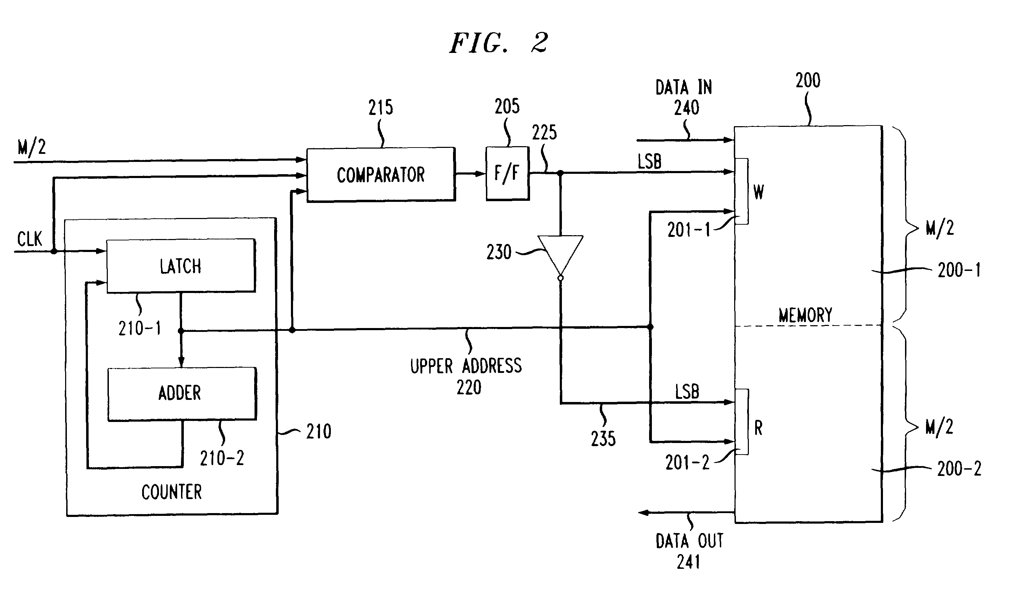

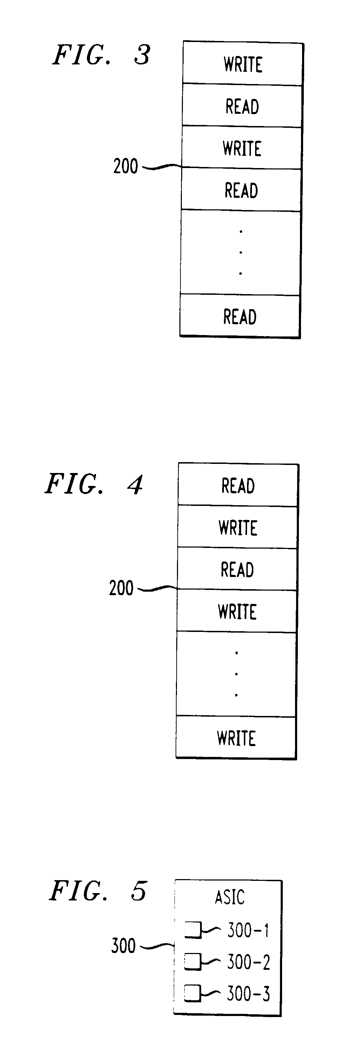

An illustrative memory system arranged in accordance with the principles of the invention is shown in FIG. 2. Memory 200, more particularly, is a conventional memory deposited on an ASIC (FIG. 3) and is composed of a number of memory locations that is not a multiple of a power of 2ⁿ, for example, M = 768. Accordingly, then, each half, 200-1 and 200-2, of memory 200 comprises M/2 = 384 locations that are accessed in a Ping-Pong fashion in accordance with an aspect of the invention. Specifically, data may be written into the even locations of memory 200 and data may be read out of the even locations of memory 200 during a first system cycle. Similarly, data may be read out of the even locations of memory 200 and data may be written (loaded) into the odd locations of memory 200 during a next system cycle. Specifically, assume that the system is currently in the first system cycle and the output of flip/flop 205 is a 0, which is outputted to lead 225 as the Least Significant Bit (LSB) of the write address that is supplied to port 201-1. Inverter 230 inverts the output supplied by flip/flop 205 and supplies the inverted result to read port 201-2. Thus, when a zero is supplied as the LSB to port 201-1, a binary one is supplied as the LSB to port 201-2, and vice-versa, thereby operating the two halves (odd and even locations) of memory 200 in a modified Ping-Pong mode in which data is written into the memory locations having even addresses and data is read out of the memory 200 locations having odd addresses, as mentioned.

Counter 210, composed of adder latch 210-1 and adder 210-2, in a conventional manner generates the upper address for W port 201-1 and for R port 201-2 and advances the upper address by one bit in response to receipt of a clock pulse at latch 210-1 via lead CLK. The LSB of the address is supplied by flip/flop via lead 225, as mentioned above. Similarly, in a first cycle when the count is zero and the LSB on lead 225 is zero, the first even location of memory 200 (address 00) is addressed as a write location and the first odd location of memory 200 (address 01 ) is addressed as a read location. That is, data is loaded (written) into the first location and data is read out of the second location. On receipt of the next clock pulse, the count in latch 210-1 is advanced by 1. At that point, the second even location of memory 200 (address 10) is addressed as a write location and the second odd location (address 11 ) is addressed as a read location, and so one until counter 210 outputs 383 as the last upper address to bus 220, such that the 383rd + 0 address of memory 200 is addressed as a write location and the 383rd + 1 address of memory 200 is addressed as a read location, as illustrated in FIG. 3. Similarly, comparator 215 compares each address that counter 210 outputs to upper address bus 220 with the value of M/2 (the value of which is assumed to be 384 for the instant illustrative example). When the upper address on bus 220 equals the value of M/2, then, on the next clock pulse, comparator 215 sets flip/flop 205, which changes the value of LSB outputted to lead 225. That is, the value of the LSB is toggled to an opposite state. As such, during the current and subsequent clock cycles, a system data receiver (represented by lead/bus 241) receives (reads) data from memory 100 locations having even addresses and a system data supplier (represented by lead 240) loads (writes) data into the memory 200 locations having odd addresses, and so on, as illustrated in FIG. 4.

Advantageously, then, in accordance with an aspect of the invention, the number of memory 200 locations does not to be a multiple of a power of 2ⁿ, but may be of almost any size that a respective application requires (i.e., divisible by 2) and wishes to operate in a Ping-Pong mode.

FIG. 5 is an illustrative example of an ASIC 300 having a number of different memories each operating in accordance with the inventive Ping-Pong mode, in which, except for memory 300-1, the size of memory 300-2 and memory 300-3 is not some multiple of a power of 2ⁿ.

It will thus be appreciated that, although the invention illustrated herein is described in the context of a specific illustrative embodiment, those skilled in the art will be able to devise numerous alternative arrangement which, although, not explicitly shown or described herein, nevertheless, embody the principles of invention and are within its spirit and scope. For example, the claimed invention may be used with a memory having a number of locations that is some multiple of a power of 2ⁿ. Also, the addresses generated to access the memory do not necessarily have to be in sequence. Moreover, the size of the memory does not necessarily have to be divisible by two.

## Claims

1. A memory system comprising
a memory having a predetermined number of memory location and having read and write ports, and
apparatus that generates a series of addresses that are supplied to the write and read ports for respectively writing data into the memory and reading data out of the memory such that during a first cycle addresses of respective even values are supplied to the write port and addresses of respective odd values are supplied to the read port, and such that during a next, second cycle the addresses of respective odd values are supplied to the write port and the addresses of respective even values are supplied to the read port cycle, and so on.

2. The memory system of claim 1 further comprising
a first address generator that generates the series of addresses, and
a second address generator that generates first and second bits having complementary binary values that are changed to respective opposite binary values at the start of each said cycle, and wherein the first bit is supplied as the least significant bit for each of the addresses that are supplied to the write port and the second bit is supplied as the least significant bit for each of the addresses that are supplied to the read port.

3. The memory system of claim 1 further comprising a comparator circuit that compares each of the addresses that said apparatus generates with a value that is one-half of said predetermined number, and
and toggles said cycle to a next succeeding cycle when the comparison is true by initializing said apparatus so that it starts the generation of the series addresses with a first address.

4. The memory system of claim 1 wherein the memory and apparatus is integrated on a ASIC.

5. A memory system comprising
a memory having M memory locations, where M > 1, and
apparatus that, during a first cycle, stores data as it received from a supplier of data in respective ones of the M memory locations having succeeding odd addresses and unloads data from respective ones of the M memory locations having succeeding even addresses for delivery to a data receiver.

6. A memory system comprising
a memory having a predetermined number of memory locations,
apparatus that, during a first cycle, stores data as it is received in respective ones of succeeding memory locations having odd addresses and unloading data from respective ones of succeeding memory locations having even addresses and supplying the unloaded data to a data receiver and, during a second cycle, stores data as it is received in the respective ones of the succeeding memory locations having even addresses and unloads data from respective ones of the succeeding memory locations having odd addresses and supplying the unloaded data to a data receiver, as so on.

7. A memory system comprising
a memory having a predetermined number of memory locations,
an address generator that generates, during each of succeeding cycles, as stream of sequential addresses corresponding to respective addresses of one-half of the locations of the memory, and supplies the generated addresses to write and read ports of the memory, and
apparatus that adds a bit whose binary values changes to an opposite value at the start of each of the cycles as the a least significant bit to each of the generated addresses that are supplied to a write port as memory write addresses and adds a complementary value of the bit as the least significant bit to the generated addresses that are supplied to the read port as memory read addresses.
